# EUROPEAN PATENT APPLICATION

(11) **EP 4 799 949 A1**
(43) Date of publication of application: **02.09.2026**
(21) Application number: 25160245.4
(22) Date of filing: 26.02.2025
(51) Int. Cl.: B65G 1/04

(54) **ROBOT PLACING AND REMOVAL**

(71) Applicant: AutoStore Technology AS, 5578 Nedre Vats (NO)
(72) Inventor: DITS, Elvira, 5578 Nedre Vats (NO)
(74) Representative: Kilburn & Strode LLP

(57) **Abstract**

The disclosure relates to a method for removing robots from a main operational grid in an automated storage and retrieval system, wherein the automated storage and retrieval system comprises a main operational grid, a robot holding area, and robot servicing area, wherein the main operational grid is physically segregated from the robot holding area, and the robot servicing area is segregated from the robot holding area comprising the steps of causing a first robot to move from the main operational grid to the robot holding area, holding the first robot in the robot holding area, and causing the first robot to move from the robot holding area to the robot servicing area.

## Description

### TECHNICAL FIELD

The disclosure relates to placement and removal of robots. More particularly, it relates to removal of robots from a main operational grid of an automated storage and retrieval system, and placement of robots on a main operational grid of an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Robots may require servicing at regular intervals or when faults or defects are detected. For example, fluid leaks, overheating, or other faults may present themselves. In any case, a number of robots may be required to be removed from the grid simultaneously. Typically, robots will be removed to a servicing area, or a service mezzanine which includes rails which connect to the main operational grid, but do not include storage locations such as in the main operational grid. Instead, the service mezzanine or the servicing area provides a platform or location for servicing of the robots to be done.

When more robots are required to be removed from the grid than there is space in the service mezzanine, robots which have developed a fault may need to wait for their service. It will be appreciated that a robot which has developed a fault is at a greater risk of causing problems for the rest of the automated storage and retrieval system. For example, an overheating robot may present a risk of fire. A leaking robot may present a risk of leaking fluids onto the main operational grid causing slippage for other robots. A robot that is slipping itself because of a leak elsewhere in the system may exacerbate the problems by spreading the leak or debris to other parts of the main operational grid. Typically, robots wait in a location on the main operational grid designated for waiting. This may allow a malfunctioning robot to affect the operation of the rest of the grid. Further, once the area designated for waiting is filled, any further malfunction may lead to a full or partial shutdown of the grid because robots are having to wait outside of the area designated for waiting. It would be advantageous to prevent knock on effects of malfunctioning robots or robots waiting for servicing from causing a full or partial shutdown of the main operational grid.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows an X-Y configuration including a servicing area;
Fig. 6 shows an X-Y configuration including a servicing area and a robot holding area.

### DETAILED DESCRIPTION

In overview, the disclosure relates to a robot holding area that is situated in between a main operational grid of the system and a servicing area of the system. The robot holding area is segregated from the main operational grid, and is also segregated from the servicing area. In providing a segregated robot holding area, the deleterious effects of malfunctioning robots can be prevented from spreading to the main operational grid. For example, waiting robots may no longer restrict use of waiting areas in the main operational grid. In another example, robots that are waiting, that present a risk to the rest of the grid by catching fire, fully shutting down and becoming immobile, or spreading leaks or debris to other parts of the system, may be kept apart from the main operational grid. A further effect of the segregated robot holding area is that in case manual access to the robot requiring servicing is needed, for example because the waiting robot has become immobile whilst awaiting servicing, then a user can manually access the robot holding area safely, whilst the main operational grid remains fully active.

### Automated storage and retrieval system overview

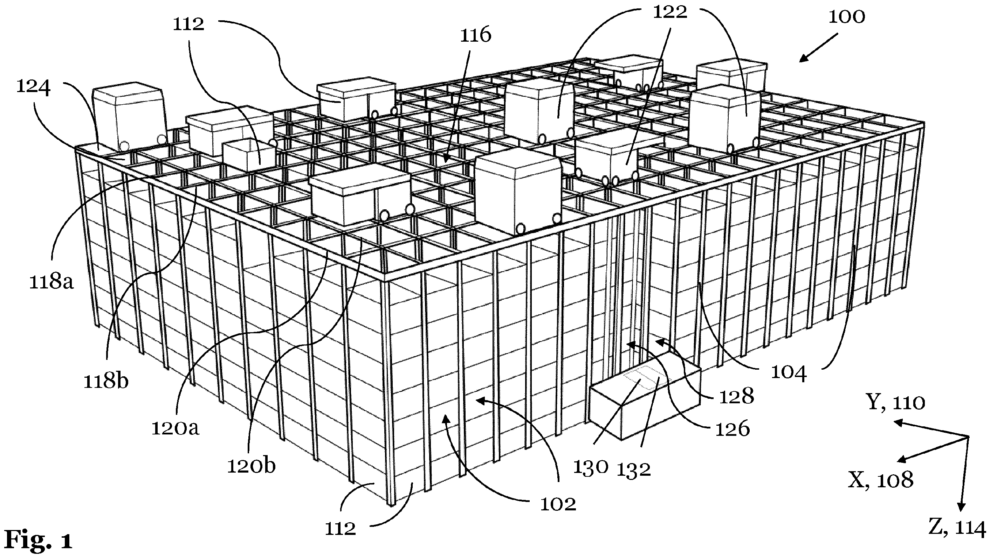

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

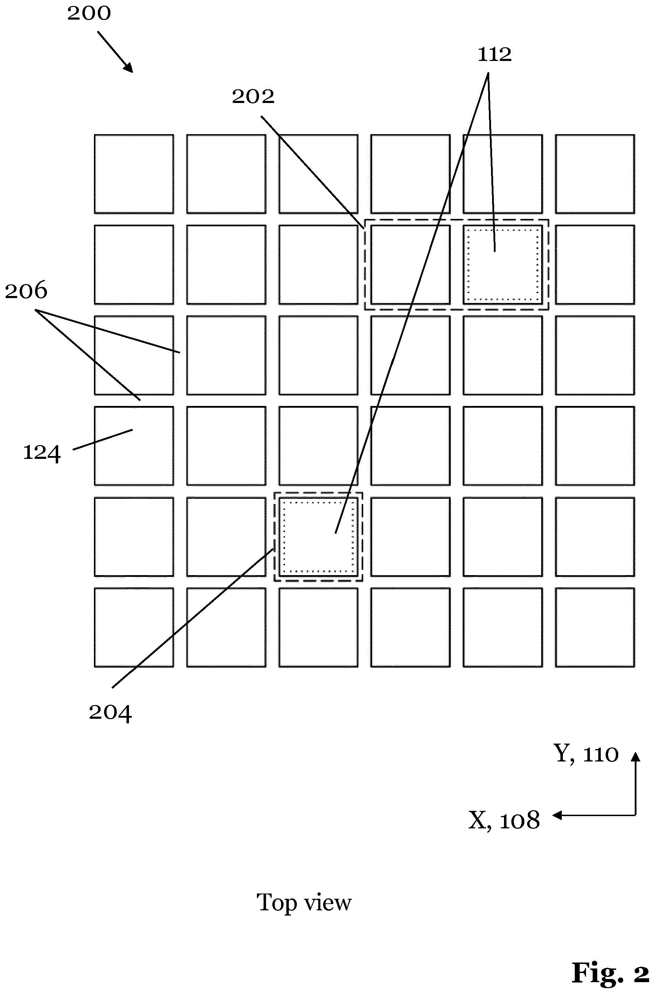

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

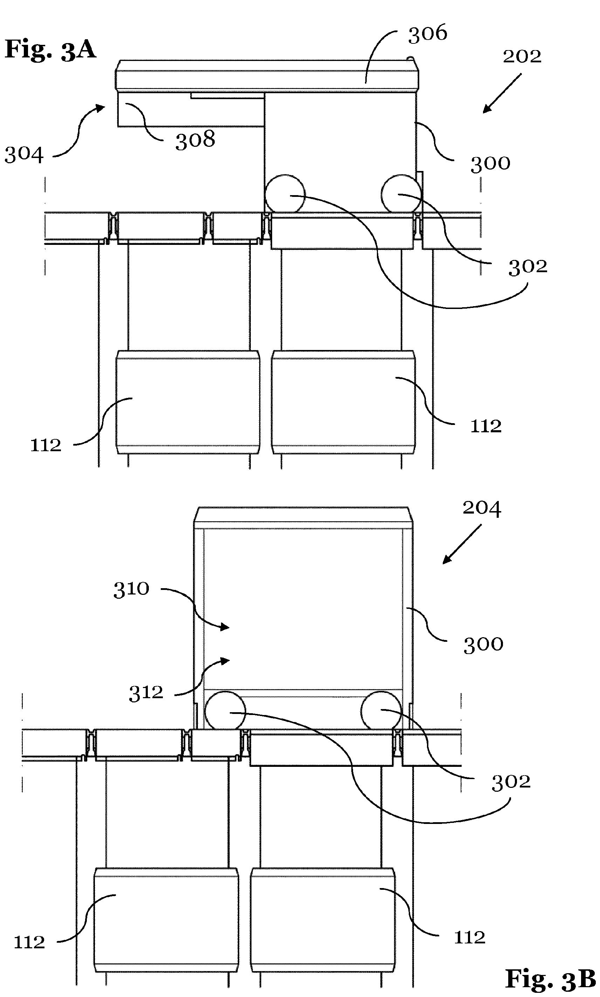

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

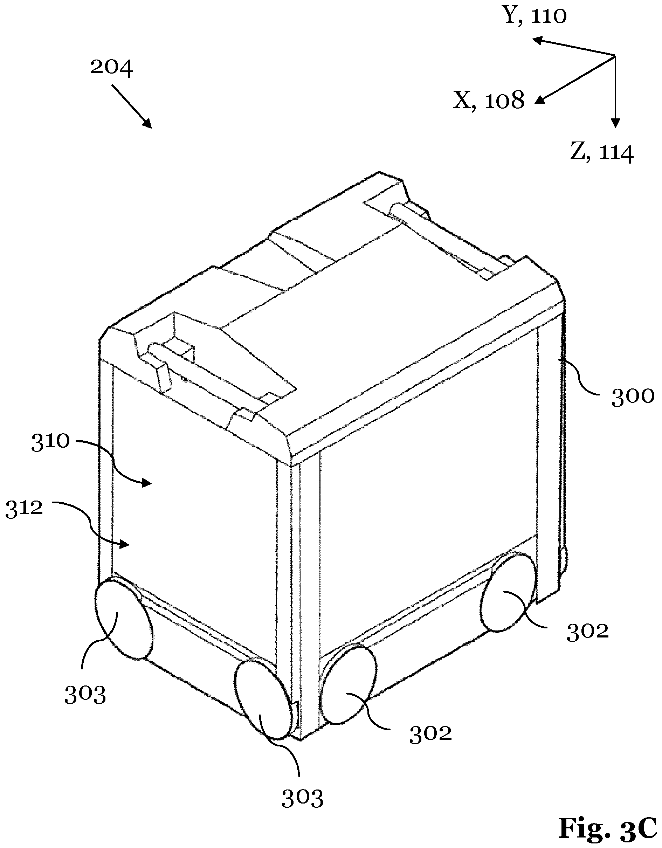

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

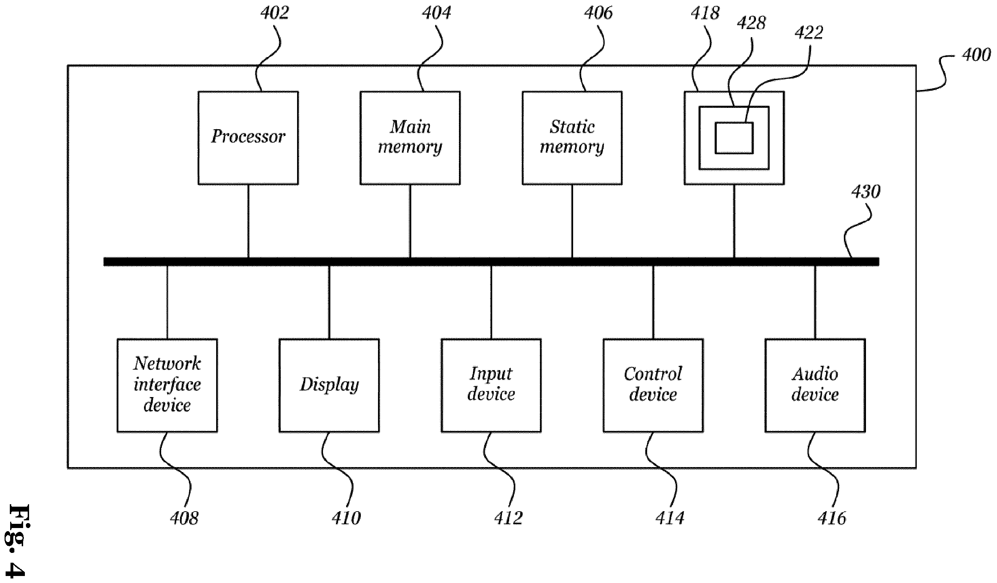

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

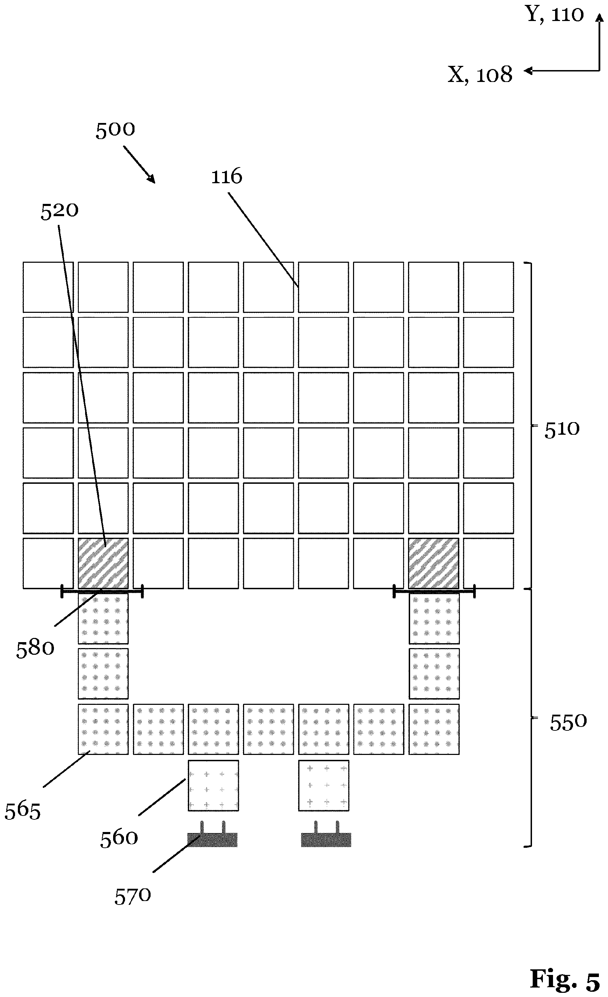

Fig. 5 shows an X-Y configuration 500 of the rail system 116 further including a robot servicing area 550, and a main operational grid 510. Robots or vehicles may operate on the main operational grid 510 to carry out storage and/or retrieval of storage bins as explained herein. Sometimes, robots 202, 204 may require some servicing. Servicing may be done on a regular basis, for intervals corresponding to the regular servicing of parts, or servicing may be done in response to a known or suspected fault of a robot. Some faults may include overheating, leakage of fluids, or compromise of a robot by goods stored in the main operational grid 510. For example, some items stored in the main operational grid 510 may leak onto the rail system 116 causing failure of the robots 202, 204 due to problems such as low friction of the wheels. The servicing area 550 may be constructed similarly to the main operational grid 510. However, the servicing area 550 will not include space for the storage of bins. In some instances, the servicing area 550 may be a mezzanine floor such that the robots 202, 204 can be manually accessed by a user 570 to carry out servicing tasks. The servicing area 550 may comprise one or more servicing bays 560 where a user 570 may work on the robot. The servicing area 550 may also include a track system 565 to provide a route for the robots to travel between the main operational grid 510 and the servicing bays 560. In some instances, a door 580 may be positioned between the main operational grid 510 and the servicing area 550. The door 580 may act as a barrier to users entering the main operational grid 510 while the main operational grid 510 still has robots carrying out their tasks. The door 580 may also, or alternatively, provide a firewall between the main operational grid 510 and the servicing area 550. In this way, should a fire break out in either the servicing area 550 or the main operational grid 510, the fire will be resisted from transferring to the other areas. For example, should a robot in the servicing area 550 catch fire due to the failure of a battery, the door 580 may prevent either the robot travelling onto the main operational grid 510 whilst on fire, or the fire spreading through the firewall of the door 580. Additionally or alternatively, the door 580 may provide a barrier to the ingress of fluids along the rail system 116 between the main operational grid 510 and the servicing area 550. In this way, fluid leaks or other dirt or debris on the rails in the servicing area will not be transmitted or allowed to pass to the main operational grid 510 whilst the door 580 is closed. This may be particularly important for robots that are being serviced since there is a potential for vehicles that are being serviced also being vehicles that may be leaking fluids or are at high risk of producing debris. In the configuration 500 shown in Fig. 5, there are two servicing bays 560 for servicing robots. When there are more than two robots that require servicing simultaneously, a third robot awaiting servicing must wait for a servicing bay 560 to become available. The main operational grid 510 may include a waiting area 520 for robots to wait until a servicing bay 560 becomes available. When a robot is waiting in the waiting area 520, the waiting area 520 of the main operational grid 510 may not be used for other operations such as storage or routing of robots on the main operational grid 510. Further, should a further robot require servicing simultaneously to the first three robots, and there is no waiting area 520 available on the main operational grid 510, the main operational grid 510 may need to be shut down. That is, some or all of the main operational grid 510 may need to be prevented from being used. Such downtime may reduce the efficiency of the automated storage and retrieval system, and it is an object of the present application to provide systems and methods to mitigate such downtime.

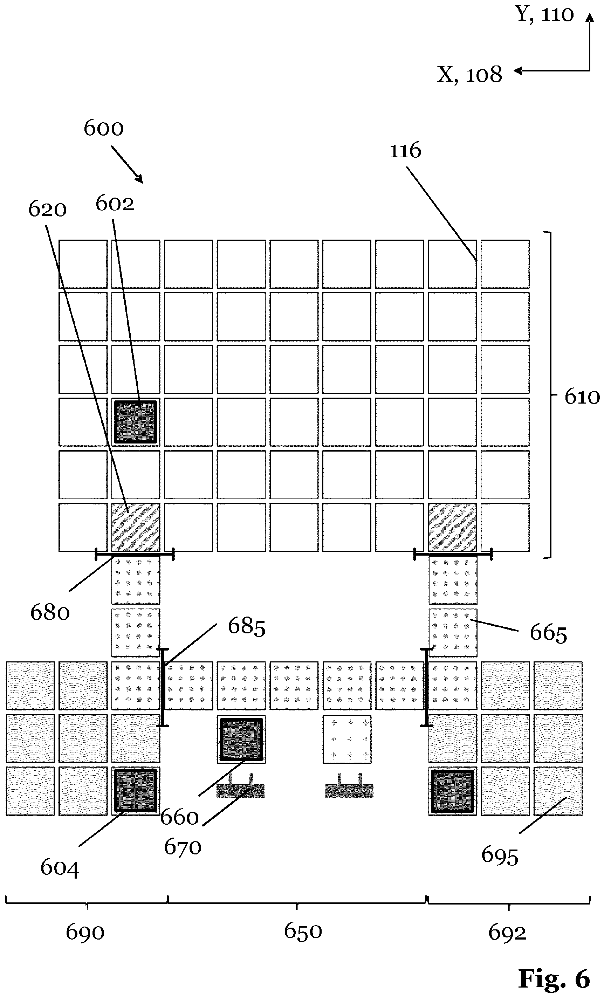

Fig. 6 shows an X-Y configuration 600 of the rail system 116 including a robot servicing area 650, and a main operational grid 610. The configuration 600 shown in Fig. 6 includes similar features to the configuration 500 of Fig. 5. However, the configuration 600 of Fig. 6 further includes a robot holding area 690, and a second door 685. Robots or vehicles 602, 604 may operate on the main operational grid 610 to carry out storage and/or retrieval of storage bins as explained herein. Sometimes, robots 602, 604 may require some servicing. Servicing may be done on a regular basis, for intervals corresponding to the regular servicing of parts, or servicing may be done in response to a known or suspected fault of a robot. Some faults may include overheating, leakage of fluids, or compromise of a robot by goods stored in the main operational grid 610. For example, some items stored in the main operational grid 610 may leak onto the rail system 116 causing failure of the robots 602, 604 due to problems such as low friction of the wheels. The servicing area 650 may be constructed similarly to the main operational grid 610. However, the servicing area 650 will not include space for the storage of bins. The servicing area 650 will be adapted to allow manual access of the robots located therein. In some instances, the servicing area 650 may be a mezzanine floor such that the robots 602, 604 can be manually accessed by a user 670 to carry out servicing tasks. The servicing area 650 may comprise one or more servicing bays 660 where a user 670 may work on the robot. The servicing area 650 may also include a track system 665 to provide a route for the robots to travel between the main operational grid 610 and the servicing bays 660.

In addition to the main operational grid 610 and the robot servicing area 650, the configuration 600 includes a robot holding area 690. The robot holding area 690 may include one or more holding bays 695 suitable for robots 602, 604 to be held for a period of time. The robot holding area may be segregated from the main operational grid 610 by a first door 680. In this way, should a fire break out in either the robot holding area 690 or the main operational grid 610, the fire will be resisted from transferring to the other areas. For example, should a robot 604 in the robot holding area 690 catch fire due to the failure of a battery, the first door 680 may prevent either the robot 604 travelling onto the main operational grid 610 whilst on fire, or the fire spreading through the firewall of the first door 680. Additionally or alternatively, the door 680 may provide a barrier to the ingress of fluids along the rail system 116 between the main operational grid 610 and the robot holding area 690. In this way, fluid leaks or other dirt or debris on the rails in the robot holding area 690 will not be transmitted or allowed to pass to the main operational grid 610 whilst the first door 680 is closed. This may be particularly important for robots that are about to be serviced since there is a potential for vehicles that are being serviced also being vehicles that may be leaking fluids or are at high risk of producing debris.

The robot holding area 690 may be segregated from the robot servicing area 650 by a second door 685. Similarly to the first door 680, the second door 685 provides a barrier to fire, fluids, or other dirt or debris from being transferred between the robot holding area 690 and the robot servicing area 650. In this way, should a fire break out in either the robot holding area 690 or the robot servicing area 650, the fire will be resisted from transferring to the other areas. For example, should a robot 604 in the robot holding area 690 catch fire due to the failure of a battery, the second door 685 may prevent either the robot 604 travelling into the robot servicing area 650 whilst on fire, or the fire spreading through the firewall of the second door 685. Additionally or alternatively, the second door 685 may provide a barrier to the ingress of fluids along the rail system 116 between the robot servicing area 650 and the robot holding area 690. In this way, fluid leaks or other dirt or debris on the rails in the robot holding area 690 will not be transmitted or allowed to pass to the robot servicing area 650 whilst the second door 685 is closed. It will be appreciated that the first door 680 and/or the second door 685 may include a flexible seal to prevent ingress of fluids along the rails 116. One or more interlocks (not shown) may be used to prevent simultaneous opening of the first door 680 and the second door 685. In this way, when the first door 680 is open, the second door 685 cannot be opened, and vice versa. Interlocks (not shown) may also be used to prevent automated operation of robots 604 in the holding area 690 during which time a user 670 may be physically accessing the robot holding area 690. This may be used, for instance, where a robot 604 requiring servicing has moved to the robot holding area 690, but in the time it has taken for the robot 604 to be allowed to move to the servicing bay 660, the robot 604 has failed to the point at which it cannot move. For example, should the battery of robot 604 completely failed whilst awaiting a free servicing bay 660, or if a leak onto the wheels of the robot 604 has become more severe whilst awaiting a free servicing bay 660, a user may safely access the completely failed robot 604 without requiring access to the main operational grid 610. User access to the main operational grid 610 may require a full or partial shutdown of the main operational grid 610 with a corresponding negative impact on the tasks of the automated storage and retrieval system.

### Methods of removing robots from, and placing robots on the grid

Now, still with reference to Fig. 6, methods of removing and placing robots from and on the grid will be described. The main operational grid 610, the servicing area 650 and the holding area 690 may be as substantially described herein with reference to Fig. 6.

A robot on the main operational grid 610, such as robot 602, may be identified as requiring servicing. The servicing required may be due to regular servicing such as regular maintenance of one or more components of the robot 602, or the servicing may be required in response to a specific fault or issue identified with the particular robot 602. For example, robot 602 may be identified as having anomalous characteristics, such as a battery draining faster than expected, wheels slipping or any other fault which may require closer inspection or remediation. Wheels slipping, for instance, may be an indicator that the wheels are compromised by oil, fluids, or debris, or it may be an indication that an encoder identifying the speed of the robot or the wheels is not recording the expected values. It is possible that a dirty or broken encoder may result in anomalous readings from the robot 602. Once a servicing requirement is identified, the robot 602 may be caused to move from the main operational grid 610 to the robot holding area 690. In order for the robot 602 to reach the robot holding area 690, the segregation between the main operational grid 610 and the robot holding area 690 must be overcome. In the instance shown in Fig. 6, the first door 680 is opened such that the robot 602 may pass from the main operational grid 610 to the robot holding area 690. Once the robot 602 is in the robot holding area 690, the robot 602 may be held for a period of time in the robot holding area 690. The robot 602 may be held in the robot holding area 690 for reasons such as, but not limited to, there not being an available servicing bay 660 for the robot 602, there not being an available user 670 to carry out the service, or there not being the requisite replacement parts or materials for carrying out the required service. After such a time of holding the robot 602 in the robot holding area 690 as the robot may now be service, the method further comprises causing the robot 602 to move from the robot holding area 690 to the robot servicing area 650. Causing the robot 602 to move may be done by issuing a command from a central controller that controls the movements of all robots on the main operational grid 610, or causing the robot 602 to move may be done by issuing direct service commands by the user 670 to the robot 602, for example by the user assuming remote control of the robot 602. Alternatively, causing the robot 602 to move may be done manually by the user 670 accessing the robot and manually moving the robot 602 to the servicing area. In manually moving the robot 602, it may be required that the user 670 physically accesses the robot holding area 690. In order to manually access the robot holding area, the user 670 may open the second door 685, whilst maintaining the first door 680 being closed. The main operational grid 610 may be allowed to continue operating whilst the user 670 manually accesses the robot holding area 690. Automated operation of any robots in the robot holding area 690 whilst a user manually accesses the robot holding area 690 may be restricted. For example, an interlock may be activated preventing any robots in the robot holding area 690 from operating. The interlock may additionally or alternatively prevent opening of the first door 680 whilst the user is manually accessing the robot holding area 690.

Once the robot 602 has been moved from the robot holding area 690 to the servicing area 650, the second door 685 may be closed again and automated movement of robots in the robot holding area may resume.

Once the robot 602 has been moved to the servicing area 650, servicing of the robot 602 may be carried out. Servicing of the robot 602 may include but is not limited to repairing or changing components of the robot, cleaning one or more components of the robot, repairing or replacing a battery or electrical systems of the robot, or cleaning wheels or sensors of the robot 602.

It will be appreciated that whilst removal of the robot 602 has been described above, the methods and systems herein may be applied to placing a robot on the main operational grid. In effect, the process of removing a robot may be reversed. For example, once a robot has been serviced and/or is otherwise ready to be returned to or placed on the main operational grid, the method may include causing the robot 602 to move from the robot servicing area 650 to the robot holding area 690. The robot holding area 690 may be the same robot holding area 690 that is used for removing robots from the main operational grid, or it may be a second robot holding area 692 substantially similar to the first robot holding area 690. The method may further comprise holding the robot 602 in the robot holding area. Once the second door 685 has been closed, the first door 680 may be opened to allow passage of the robot 602 onto the main operational grid 610. The method may then further comprise causing the robot 602 to move from the robot holding area 690 to the main operational grid 610. Now that the robot 602 is on the main operational grid 610, the robot 602 may begin or resume activities on the main operational grid 610 such as storage and retrieval of bins 112 in the automated storage and retrieval system.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A method for removing robots from a main operational grid in an automated storage and retrieval system, wherein the automated storage and retrieval system comprises a main operational grid, a robot holding area, and robot servicing area, wherein the main operational grid is physically segregated from the robot holding area, and the robot servicing area is segregated from the robot holding area comprising the steps of:
causing a first robot to move from the main operational grid to the robot holding area,
holding the first robot in the robot holding area, and
causing the first robot to move from the robot holding area to the robot servicing area.

2. The method of claim 1, wherein the main operational grid is physically segregated from the robot holding area by a first barrier, and wherein the method further comprises opening the first barrier to allow the first robot to move from the main operational grid to the robot holding area, and subsequently closing the first barrier.

3. The method of claim 1 or claim 2, wherein the robot servicing area is segregated from the robot holding area by a second barrier, and wherein the method further comprises opening the second barrier to allow the first robot to move from the robot holding area to the robot servicing area, and subsequently closing the second barrier.

4. The method of any preceding claim, wherein the robot servicing area is a manual servicing area configured for servicing of a robot by a user.

5. A method for removing robots from a main operational grid in an automated storage and retrieval system, wherein the automated storage and retrieval system comprises a main operational grid, a robot holding area, and robot servicing area, wherein the main operational grid is physically segregated from the robot holding area, and the robot servicing area is segregated from the robot holding area comprising the steps of:
causing a first robot to move from the main operational grid to the robot holding area,
holding the first robot in the robot holding area,
determining that the first robot is unable to move from the robot holding area to the robot servicing area,
preventing any automated movement of robots in the robot holding area, and
manually accessing the robot holding area to retrieve the first robot.

6. A method for placing robots on a main operational grid in an automated storage and retrieval system, wherein the automated storage and retrieval system comprises a main operational grid, a robot holding area, and robot servicing area, wherein the main operational grid is physically segregated from the robot holding area, and the robot servicing area is segregated from the robot holding area comprising the steps of:
causing a first robot to move from the robot servicing area to the robot holding area,
holding the first robot in the robot holding area,
determining that the first robot is unable to move from the robot holding area to the main operational grid,
preventing any automated movement of robots in the robot holding area, and
manually accessing the robot holding area to retrieve the first robot.

7. A method for placing robots on a main operational grid in an automated storage and retrieval system, wherein the automated storage and retrieval system comprises a main operational grid, a robot holding area, and robot servicing area, wherein the main operational grid is physically segregated from the robot holding area, and the robot servicing area is segregated from the robot holding area comprising the steps of:
causing a first robot to move from the robot servicing area to the robot holding area,
holding the first robot in the robot holding area, and
causing the first robot to move from the robot holding area to the main operational grid.

8. An automated storage and retrieval system comprising:
a storage grid,
a plurality of robots movable on the storage grid to store and retrieve items in the storage grid,
a robot holding area physically segregated from the storage grid and configured to receive one or more robots from the storage grid,
a robot servicing area physically segregated from the robot holding area and configured to allow manual servicing of the one or more robots.

9. The automated storage and retrieval system of claim 8, wherein the robot holding area is physically segregated from the storage grid by a first barrier, and/or wherein the robot holding area is physically segregated from the robot servicing area by a second barrier.

10. The automated storage and retrieval system of claim 9, wherein the first barrier and/or the second barrier are flame resistant barriers.

11. The automated storage and retrieval system of claim 9 or claim 10, wherein the first barrier and/or the second barrier are configured to prevent ingress of fluid between the storage grid, the robot holding area, and the robot servicing area, optionally wherein the first barrier and/or the second barrier comprise a flexible seal configured to engage one or more rails on which the plurality of robots travel.

12. The automated storage and retrieval system of any of claims 9 to 11, further comprising an interlock configured to prevent simultaneous opening of both the first barrier and the second barrier.

13. The automated storage and retrieval system of any of claims 9 to 11, further comprising an interlock configured to prevent automated operation of any robot in the robot holding area during user access of the robot holding area.
